# EUROPEAN PATENT SPECIFICATION

(11) **EP 1 754 209 B1**
(45) Date of publication and mention of the grant of the patent: **23.07.2014**
(21) Application number: 05756761.2
(22) Date of filing: 03.06.2005
(51) Int. Cl.: G09B 23/32

(54) **BREATHING MANIKIN**
ATMENDE MODELLPUPPE
MANNEQUIN RESPIRANT

(30) Priority: 09.06.2004 NO 20042402
(43) Date of publication of application: 21.02.2007
(73) Proprietor: Laerdal Medical AS, 4002 Stavanger (NO)
(72) Inventor: MESTAD, Einar, N-4085 Hundvåg (NO); HODNE, Håkon, N-4352 Kleppe (NO); TJØLSEN, Øyvind, N-4032 Stavanger (NO)
(74) Representative: Tofting, Arild
(86) International application number: PCT/NO2005/000186
(87) International publication number: WO 2005/122111

(56) References cited:
- GB-A- 1 291 198
- US-A- 4 001 950
- US-A1- 2004 058 305
- US-A1- 2004 101 814
- NORGREN: "V74G - 74 series pressure relief valve 3/8, 1/2, 3/4, port sizes", INTERNET CITATION, [Online] 2 October 2008 (2008-10-02), pages 1-3, XP007905830, Retrieved from the Internet: URL:http://www.norgren.com/web_pubs/public ationresults.asp?action=globalsearch&searc hstring=V74G> [retrieved on 2008-10-02]

## Description

The present invention relates to a medical patient simulator device, in particular a device for simulating spontaneous breathing with a training doll, a so-called manikin, as defined in the preamble of the subsequent claim 1.

The invention concerns systems intended for patient simulators (especially dolls or so-called manikins) used for medical teaching and training. It is an object for the manikin to exhibit various signs of illness and both normal and abnormal bodily functions in order to allow the users to make a diagnosis and take corrective measures. In connection with practising treatments it is desirable to simulate so-called spontaneous breathing with a patient. Spontaneous breathing implies that the patient begins to breathe by its own.

Previous solutions for simulating spontaneous breathing are known. Common for these is that the mechanism that provides the breathing is very complicated. An example of such known device is shown in GB 1291198. Here the raise of the chest is provided by a number of small pneumatics cylinders that are supplied with air from a respective air bladder. The air bladder is squeezed together by a cam mechanism driven by a shaft which is connected to an electric motor. Even though the mechanism is able to provide complex breathing patterns, it occupies a great deal of space. Document US 2004/101814 A1 discloses a patient simulator manikin and system for simulating a fluid flow condition within a fluid carrying body cavity. Today's manikins have gradually been filled with a high degree of functionality and it is therefore little room available for new equipment in the manikin. It is therefore an object of the present invention to provide a device for simulating spontaneous breathing, which does not occupy much space. Moreover, it is an object to provide a device for simulating spontaneous breathing, which consists of inexpensive components.

This is achieved according to the present invention by a device characterized by the features which appears in the characterising part of the subsequent claim 1.

The invention will now be described in greater detail with reference to an embodiment example shown in the following drawings, in which:
Figure 1 shows the principles schematically with an embodiment of the invention,
Figure 2 shows a circuit diagram for the embodiment in figure 1,
Figure 3 shows components and flow lines between these, and
Figure 4 shows examples of potential breathing patterns.

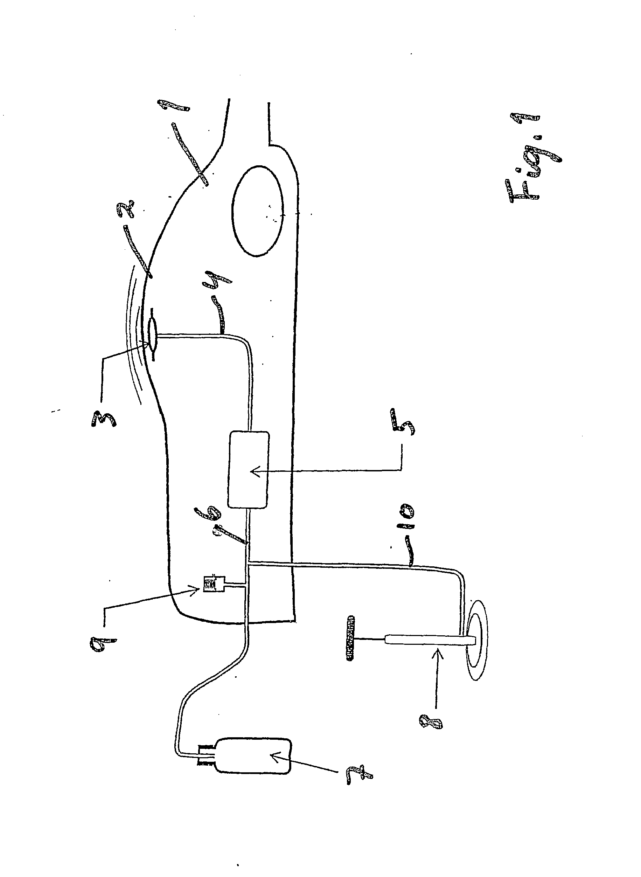

An embodiment of the invention is shown schematically in figure 1. The manikin is referred to with reference number 1. Under a breast plate (not shown) in the manikin's chest 2 an inflatable bladder 3 is placed. The bladder is connected with a pressure regulator and a control valve 5 via an air hose 4. An example of a pressure regulator and a control valve will be explained in more detail below.

The pressure regulator is connected to an accumulator 7 via an air hose 6. From the air hose 6 a branch 10 stretches which connect the air hose 6 with a pump 8. In this example a bicycle pump is used, but in principle any pump may be used.

The air hose 6 is also provided with a pressure relief valve 9.

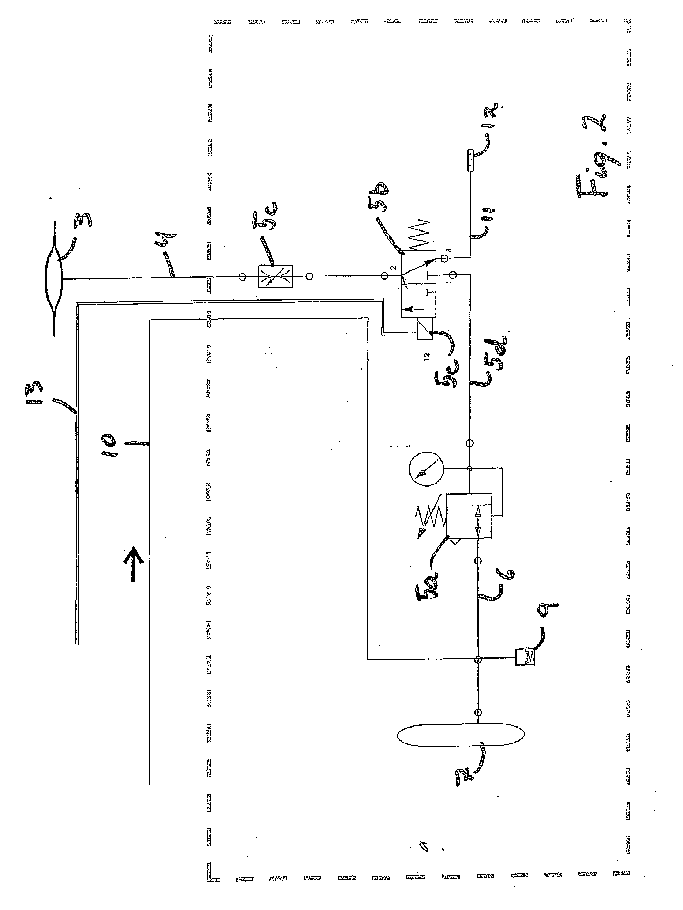

The pressure regulator and the control valve 5 will now be explained in more detail with reference to figure 2. Figure 2 shows the bladder 3, the accumulator 7, the air hose 10, and the pressure relief valve 9. The pump 8 is not shown in figure 2. The pressure regulator and the control valve 5 consist of a pressure regulator 5a and a control valve 5b. In addition an adjustable restriction 5c is connected the control regulator. The restriction 5c is placed in line 4 in the example shown. However, it may also be placed in the line 5d, between the pressure regulator 5a and the control valve 5b. The purpose of the restriction is primarily to see to that the air is gradually let out of the bladder 3. The bladder will thereby also be filled slower. This will correspond to a normal breathing pattern. Meanwhile, it is also possible to place the restriction in an exhaust gas pipe 11 so that the air is restricted only when deflating the bladder.

The pressure regulator 5a sees to that the pressure supplied to the control valve 5b is limited to a pressure acceptable for the bladder 3. This pressure may for example be about 2 bar. It is also possible to adjust the pressure regulator 5a for adaptation to different bladders.

The control valve 5b is a two-way valve which in a first position let air from the pressure regulator 5a to the bladder 3. In a second position, as in figure 2, it lets air from the bladder to the exhaust gas pipe 11. At the end of the exhaust gas pipe a silencer 12 is provided.

The control valve is steered by a not shown processor via a wire-pair 13, which is connected with a solenoid 5e.

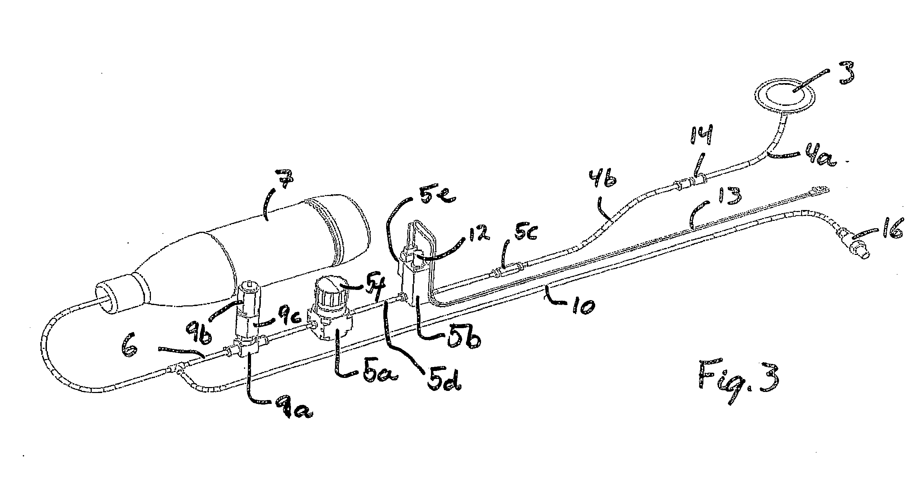

Figure 3 shows an example of an actual embodiment of the present invention. The bladder 3 is assembled by two foil pieces which are welded or glued to each other along the edge. A first part 4a of the air hose 4 is permanently connected to the bladder 3. This is connected to a second part 4b of the air hose 4 via a quick coupling 14. On the air hose part 4b the restriction 5c is placed. Further one finds the control valve 5b. On the control valve the solenoid 5e is provided and connected to the wire-pair 13 for connection to the processor (not shown). The exhaust duct goes via the control valve 5b and the silencer 12 is provided on the house of the control valve 5b.

Further one finds the pressure regulator 5a, which is equipped with a wheel 5f for pressure adjustment of the regulator. Further along the air line 6 one finds the pressure relief valve 9, which is connected to the line 6 by a T-piece 6a. The actual pressure relief valve 9b is connected to the T-piece via a middle piece 9c.

Further the line 6 stretches against the accumulator 7. This may be a bottle stored in PET or polyvinyl. In principle a PET mineral water bottle may be used, but it will be practical to make a bottle particularly for the purpose, so that it may be shaped for the best use of space.

In line 6 there is also placed a T-piece 15, which connects line 6 with line 10. At the end of line 10 a quick coupling 16 is provided for the connection of a pump. This quick coupling may be of the same type as the one found on a bicycle- or car tyre, with an integrated non return valve.

All components, except the bladder 3 can be placed in the manikin's thigh, calf or hip where few components are already placed. The quick coupling 16 can also be placed elsewhere on the manikin, for example in an area where the rest of the connections to the manikin is gathered.

The object of the device will now be explained in more detail with reference to figures 1-3. First a pressure is pumped into the accumulator 7 with the aid of the pump 8. The pressure may typically be 18-19 bar. When the pressure exceeds this, the pressure relief valve 9 will be triggered and release excess pressure. The pressure relief valve may prospectively also be provided with a whistle, which gives a sound signal when the excess pressure is released. When full pressure in the accumulator is obtained, the pump 8 may be detached.

The processor (not shown) can be set to initiate spontaneous breathing when certain physiological conditions are met or start the breathing randomly. The processor can also be manually overruled so that an instructor may start spontaneous breathing at will.

When spontaneous breathing is started the control valve 5b opens for air. Air thereby flows from the accumulator to the line 6, through the pressure regulator 5a and the control valve 5b to the bladder 3. Thus, the bladder 3 gets inflated and raises the breast plate (not shown), which causes the chest 2 of the manikin 1 to rise. The inflation may possibly also be accompanied by a breathing sound, which may be generated either by a sound distributor inside the manikin or because of the design of the above mentioned "respiratory passage". During inflation of the bladder 3 the restriction 5c will limit the amount of air flowing to the bladder, so that there will be some time before the bladder is fully inflated. The time passed before the bladder is inflated may be regulated by adjusting the restriction 5c.

When the bladder 3 is to be deflated the control valve 5b is reversed to the position shown in figure 2. The bladder 3 is squeezed together by the breast plate (not shown) whish is located over the bladder 3. The air is thereby released from the bladder 3 back to the control valve 5b and out through the exhaust gas pipe 11. Thus, only one line is used for filling and return. This eases the line wiring. Instead of returning the air to the control valve, it is also possible to release the air close to the bladder 3 by providing a leakage hole which releases a smaller amount of air than that delivered at inflation.

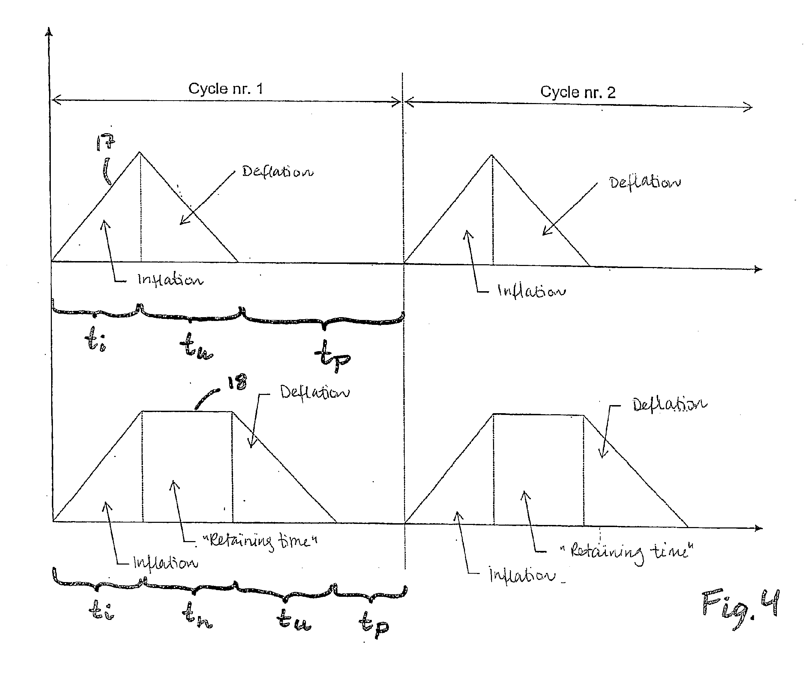

Figure 4 shows two examples of potential breathing patterns. The time is indicated along the horizontal axis and the ratio of fullness of the bladder (prospectively also pressure) is indicated along the vertical axis.

A curve 17 where air is let in during a period tᵢ is shown at the top. During the period tᵤ the air is released again. It is then a break during period tp, after which a new cycle begins.

An alternative breathing pattern is shown at the bottom at curve 18. Here air is let in during a period tᵢ. Thereafter the air is held in the bladder during the period tₕ. During the period tᵤ the air is released again. It is then a break during period tp, after which a new cycle begins. During the period tₕ the control valve 5b is open from air hose 5d to air hose 4 and the pressure is kept at the level of which the pressure regulator set.

It is of course possible to specify other types of breathing patterns. By regulating the time the control valve 5b is open in one or the other direction one may for example simulate hyper ventilation or faint breathing. The control valve 5b may possibly also be provided with a third position, where both air supply to the bladder 3 and return of air from the bladder 3 is closed, so that it is possible to keep the bladder filled with less air than the maximum allowed by the pressure regulator 5a, in order to simulate for example faint breathing. The not shown processor can be loaded with different programs for operation of the control valve 5b in the different breathing patterns.

## Claims

1. A medical training manikin (1) to simulate spontaneous breathing, comprising a torso containing at least one pneumatic actuator (3) for obtaining raise of the manikin's chest (2) or stomach, the actuator (3) being connected to an accumulator (7) via a control valve (5b), which is designed to let air from the accumulator (7) into the actuator (3), **characterized in that** said accumulator (7) is designed to be temporarily connected to an external pneumatic source (8) for filling the accumulator (7) with a pneumatic pressure adequate for repeated actuations by the actuator (3), that the control valve (5b) is connected to the actuator (3) via a line (4) between the control valve (5b) and the actuator (3), which in a first position of the control valve (5b) conducts air from the accumulator (7) to the actuator (3) and in a second position of the control valve (5b) conducts air from the actuator (3) to an exhaust outlet (11), so that the line (4) acts as both a filling line for the actuator (3) and as a return line, the line (4) comprising a restriction (5c) designed to limit the amount of pneumatic fluid released from the actuator (3).

2. A device according to claim 1, characterized i n that the actuator (3) is a bladder.

3. A device according to one of the preceding claims, **characterized in that** it comprises a pressure regulator (5a) placed in the communication path between the accumulator (7) and the actuator (3).

4. A device according to one of the preceding claims, **characterized in that** it comprises a pressure relief valve (9), which is designed to release excess pressure during filling of the accumulator (7).

5. A device according to one of the preceding claims, ch a ra cte rized in that it comprises a coupling (10) for the connection of an external air source (8), for example a bicycle pump.

6. A device according to one of the preceding claims, **characterized in that** the accumulator (7) is a plastic bottle, for example of PET or polyvinyl.

7. A device accord ing to one of the preceding claims, **characterized in that** the control valve (5b) is a two-way valve designed to be controlled from a processor in the simulator.

8. A device according to one of the preceding claims, **characterized in that** the pneumatic actuator (3), the control valve (5b), the line (4), and the restriction (5c) are arranged inside said manikin.

## Patentansprüche

1. Medizinisches Übungsmodell (1), um Spontanatmung zu simulieren, umfassend einen Rumpf, welcher zumindest einen pneumatischen Antrieb (3) enthält, um ein Heben des Brustkorbs (2) oder Bauchs des Modells zu erhalten, wobei der Antrieb (3) mit einem Druckspeicher (7) über ein Steuerventil (5b) verbunden ist, welches ausgeführt ist, um Luft vom Druckspeicher (7) in den Antrieb (3) einzulassen, **dadurch gekennzeichnet, dass** der Druckspeicher (7) ausgeführt ist, um zeitweise mit einer externen Druckluftquelle (8) verbunden zu sein, zum Füllen des Druckspeichers (7) mit einem pneumatischen Druck, welcher für wiederholte Antriebe durch den Antrieb (3) ausreichend ist, und dass das Steuerventil (5b) mit dem Antrieb (3) über eine Leitung (4) zwischen dem Steuerventil (5b) und dem Antrieb (3) verbunden ist, welche in einer ersten Stellung des Steuerventils (5b) Luft vom Druckspeicher (7) zum Antrieb (3) führt und in einer zweiten Stellung des Steuerventils (5b) Luft vom Antrieb (3) zu einem Abgasauslass (11) führt, so dass die Leitung (4) sowohl als eine Füllleitung für den Antrieb (3), als auch als eine Rückführleitung wirkt, wobei die Leitung (4) eine Drosselstelle (5c) umfasst, welche ausgeführt ist, die Menge des pneumatischen Fluids zu begrenzen, welches vom Antrieb (3) freigesetzt wird.

2. Vorrichtung nach Anspruch 1, **dadurch gekennzeichnet, dass** der Antrieb (3) eine Blase ist.

3. Vorrichtung nach einem der vorhergehenden Ansprüche, **dadurch gekennzeichnet, dass** sie einen Druckregler (5a) umfasst, welcher im Übertragungsweg zwischen dem Druckspeicher (7) und dem Antrieb (3) angeordnet ist.

4. Vorrichtung nach einem der vorhergehenden Ansprüche, **dadurch gekennzeichnet, dass** sie ein Druckentlastungsventil (9) umfasst, welches ausgeführt ist, Überdruck während des Füllens des Druckspeichers (7) freizusetzen.

5. Vorrichtung nach einem der vorhergehenden Ansprüche, **dadurch gekennzeichnet, dass** sie eine Kupplung (10) umfasst, zum Verbinden der externen Luftquelle (8), zum Beispiel einer Fahrradpumpe.

6. Vorrichtung nach einem der vorhergehenden Ansprüche, **dadurch gekennzeichnet, dass** der Druckspeicher (7) eine Kunststoffflasche ist, zum Beispiel aus PET oder Polyvinyl.

7. Vorrichtung nach einem der vorhergehenden Ansprüche, **dadurch gekennzeichnet, dass** das Steuerventil (5b) ein Zwei-Wege-Ventil ist, welches ausgeführt ist, um von einem Rechner im Simulator gesteuert zu werden.

8. Vorrichtung nach einem der vorhergehenden Ansprüche, **dadurch gekennzeichnet, dass** der pneumatische Antrieb (3), das Steuerventil (5b), die Leitung (4) und die Drosselstelle (5c) innerhalb des Modells angeordnet sind.

## Revendications

1. Mannequin de formation médicale (1) pour simuler une respiration spontanée, comprenant un torse contenant au moins un actionneur pneumatique (3) pour obtenir une élévation de la poitrine (2) ou de l'estomac du mannequin, l'actionneur (3) étant connecté à un accumulateur (7) par l'intermédiaire d'une soupape de commande (5b), qui est conçue pour laisser passer de l'air en provenance de l'accumulateur (7) dans l'actionneur (3), **caractérisé en ce que** ledit accumulateur (7) est conçu de manière à être connecté temporairement à une source pneumatique externe (8) pour charger l'accumulateur (7) avec une pression pneumatique adéquate pour des actionnements répétés par l'actionneur (3), **en ce que** la soupape de commande (5b) est connectée à l'actionneur (3) par l'intermédiaire d'une ligne (4) entre la soupape de commande (5b) et l'actionneur (3) qui, dans une première position de la soupape de commande (5b), conduit de l'air de l'accumulateur (7) à l'actionneur (3) et, dans une deuxième position de la soupape de commande (5b), conduit de l'air de l'actionneur (3) à une sortie d'échappement (11), de telle sorte que la ligne (4) agisse à la fois comme une ligne de charge pour l'actionneur (3) et comme une ligne de retour, la ligne (4) comprenant une restriction (5c) conçue pour limiter la quantité de fluide pneumatique libérée par l'actionneur (3).

2. Dispositif selon la revendication 1, **caractérisé en ce que** l'actionneur (3) est une poche souple.

3. Dispositif selon l'une quelconque des revendications précédentes, **caractérisé en ce qu'**il comprend un régulateur de pression (5a) qui est placé dans le chemin de communication entre l'accumulateur (7) et l'actionneur (3).

4. Dispositif selon l'une quelconque des revendications précédentes, **caractérisé en ce qu'**il comprend une soupape de détente (9) qui est conçue pour relâcher l'excès de pression pendant la charge de l'accumulateur (7).

5. Dispositif selon l'une quelconque des revendications précédentes, **caractérisé en ce qu'**il comprend un couplage (10) pour connecter une source d'air externe (8), par exemple une pompe de bicyclette.

6. Dispositif selon l'une quelconque des revendications précédentes, **caractérisé en ce que** l'accumulateur (7) est une bouteille de plastique, par exemple de polyéthylène téréphtalate (PET) ou de polyvinyle.

7. Dispositif selon l'une quelconque des revendications précédentes, **caractérisé en ce que** la soupape de commande (5b) est une soupape à deux voies qui est conçue pour être commandée par un processeur dans le simulateur.

8. Dispositif selon l'une quelconque des revendications précédentes, **caractérisé en ce que** l'actionneur pneumatique (3), la soupape de commande (5b), la ligne (4) et la restriction (5c) sont agencées à l'intérieur dudit mannequin.
